# EUROPÄISCHE PATENTANMELDUNG

(11) **EP 2 123 387 A1**
(43) Veröffentlichungstag der Anmeldung: **25.11.2009**
(21) Anmeldenummer: 08013941.3
(22) Anmeldetag: 04.08.2008
(51) Int. Cl.: B23K 9/173, B23K 35/38

(54) **Verfahren zum Kurzschluss-Lichtbogenfügen unter Verwendung eines Gases umfassend Helium und Kohlendioxid ; entsprechendes Gas**

(30) Priorität: 23.05.2008 DE 102008024977
(71) Anmelder: Linde AG, 80331 München (DE)
(72) Erfinder: Matz, Christoph, 85716 Unterschleissheim (DE); Wilhelm, Gerald, Dr., 85716 Unterschleissheim (DE)
(74) Vertreter: Schüssler, Andrea

(57) **Zusammenfassung**

Die Erfindung betrifft ein Verfahren zum Lichtbogenfügen eines Werkstücks unter einem Schutzgas mit einer abschmelzenden Elektrode unter Verwendung eines Kurzlichtbogens, bei welchem Material von der abschmelzenden Elektrode an das Werkstück unter Bildung eines elektronisch gesteuerten elektrischen Kurzschlusses übergeben wird, wobei ein Schutzgas verwendet wird, das aus 10 bis 80 VoI.-% Helium und 20 bis 90 Vol.-% CO₂ besteht.

## Beschreibung

Die vorliegende Erfindung betrifft ein Verfahren zum Lichtbogenfügen eines Werkstücks unter einem Schutzgas mit einer abschmelzenden Elektrode unter Verwendung eines Kurzlichtbogens, bei welchem Material von der abschmelzenden Elektrode an das Werkstück unter Bildung eines elektronisch gesteuerten elektrischen Kurzschlusses übergeben wird.

Das Lichtbogenfügen unter Schutzgas ist eine viel eingesetzte Fügetechnik. Dabei brennt ein Lichtbogen zwischen einer in einem Brenner angeordneten Elektrode und einem zu bearbeitenden Werkstück. Eine Schweißverbindung entsteht dabei durch ein Aufschmelzen des Grundwerkstoffs an der Bearbeitungsstelle im Lichtbogen und eine anschließende Wiedererstarrung des Werkstoffs. Wird eine abschmelzende Elektrode verwendet, geht das Material der Elektrode als Zusatzwerkstoff in die Schweißverbindung ein. Bei einer Hartlotverbindung entsteht die stoffflüssige Verbindung durch das geschmolzene und wieder erstarrte Lot, welches als Zusatzwerkstoff zugegeben wird. Der Grundwerkstoff wird dabei nicht aufgeschmolzen, vielmehr entsteht eine Verklammerung von Lot- und Grundwerkstoff. Beim Hartlöten mit Lichtbogen wird dazu meist eine abschmelzende Elektrode verwendet. Für den Übergang des Elektrodenmaterials gibt es unterschiedliche Varianten, die auch zu unterschiedlich brennenden Lichtbögen führen. So gibt es beispielsweise den Sprühlichtbogen, den Lichtbogen mit globularem Tröpfchenübergang, den rotierenden Lichtbogen mit Tröpfchenübergang und den Kurzlichtbogen.

Beim Kurzlichtbogen entsteht zwischen der Elektrode und dem Werkstück, welches als zweite Elektrode gepolt wird, während des Elektrodenwerkstoffübergangs, also wenn das flüssige oder teigige Material sich von der Elektrode zu lösen beginnt und sich eine Brücke zwischen Elektrode und Werkstück ausbildet ein elektrischer Kurzschluss. Durch den Kurzschluss wird der sich von der Elektrode abzulösen beginnende Tropfen abgeschnürt, worauf sich der Tropfen von der Elektrode löst. In dem elektrischen Feld, das nun nach Auflösung des Kurzschlusses wieder vorliegt, entzündet sich der Lichtbogen wieder. Ein neuer Zyklus beginnt. Bei den meisten Schweißgeräten steigt der Schweißstrom in dem Moment steil nach oben an, in welchem der Kurzschluss ausgebildet wird, abhängig von der Induktivität des elektrischen Kreises der Stromquelle. Zündet nun der Lichtbogen im Moment der Tropfenabschnürung bei gleichzeitig hoher Stromstärke wieder entstehen große Mengen Spritzer. In neueren Stromquellen wird ein Abschalten des Lichtbogens vorgenommen, um die Spritzerbildung, die mit der Kurzschlussbildung einhergeht, einzudämmen. Diese erfolgt mittels elektronischer Steuerung.

Beim Fügen wird durch den Lichtbogen lokal Wärme in das Werkstück eingebracht. Dies ist einerseits nötig, um das Werkstück und das Zusatzmaterial zu verflüssigen, ein Schmelzbad entstehen zu lassen und damit nach der Erstarrung eine stoffschlüssige Verbindung vorliegt. Andererseits aber bringt der Wärmeeintrag Probleme mit sich. So treten im Werkstück aufgrund der Temperaturdifferenz Spannungen auf, die zu einem Verzug des Bauteils führen können.

Beim Schweißen von dünnen Werkstücken, insbesondere von dünnen Blechen mit einer Stärke von wenigen Millimetern, wird die Schmelze sehr leicht aus dem Schweißbad geblasen, so dass es zu Löchern kommt.

Auch beim Fügen beschichteter Werkstücke treten Probleme auf, wenn die im Vergleich zum Grundwerkstoff bei niedriger Temperatur verdampfende Beschichtung aufgrund des Wärmeeintrags zu einer Rauchbildung führt und es so zu Einschlüssen und Poren in der Schweißnaht kommt. Die letztgenannten Probleme zeigen sich insbesondere beim Fügen verzinkter Bleche.

Prinzipiell weist der Kurzlichtbogen von allen Lichtbogenarten den geringsten Wärmeeintrag auf. Um die auf dem Wärmeeintrag basierenden Probleme zu verringern, wurde nun in jüngster Zeit dieses gute Vorraussetzungen bezüglich des Wärmeeintrags bietende Verfahren des Schweißens und Hartlötens mit Kurzlichtbogen in Hinblick auf eine Minimierung des Wärmeeintrags weiterentwickelt. Vorraussetzung dafür ist die Möglichkeit einer elektronischen Regelbarkeit. Durch die elektronische Regelung wird in erster Linie der Kurzschlussstrom verringert, so dass der Wärmeeintrag in das Werkstück zurückgeht. Ferner wird mit der elektronischen Steuerung die Abruptheit, mit welcher die Kurzschlussbrücke reißt und der Materialübergang stattfindet, abgemildert, so dass die Schweißspritzer deutlich abnehmen. Die elektronische Regelung betrifft dabei meist die Strom- und Spannungswerte. Teilweise wird auch die Drahtförderung in die Steuerung mit einbezogen. Verfahren und Apparate zum Schweißen mit elektronisch gesteuertem Kurzlichtbogen sind beispielsweise in den Druckschriften US 2005/0056629, EP 1 462 207, EP 1 379 354, WO 2005/042199 und WO 2005/051586 erwähnt.

Aus der WO 03/064096 geht ein Verfahren zum Verschweißen von PKW-Elementen hervor. Abhängig von der Metallurgie der Werkstoffe ist bei diesem Verfahren vorgesehen eines der folgenden Schutzgasgemische zu verwenden Ar/CO₂, Ar/CO₂/O₂, Ar/H₂/CO₂, Ar/He/CO₂, Ar/He, Ar/O₂ Ar/He/O₂.

Derartige Argon-basierte Schutzgasgemische haben sich in der Praxis sehr bewährt und sind umfangreich in Gebrauch. Die Hauptkomponente dieser Gemische ist Argon. Der Argonanteil beträgt hierbei zumindest 60% am Gesamtgemisch.

In der EP 1 757 401 A1 ist ein Verfahren zum Lichtbogenfügen beschrieben, bei dem ein Werkstück unter einem Schutzgas mit einer abschmelzenden Elektrode unter Verwendung eines Kurzlichtbogens, bei welchem Material von der abschmelzenden Elektrode an das Werkstück unter Bildung eines elektronisch gesteuerten elektrischen Kurzschlusses übergeben wird. Das Schutzgas besteht aus 50 bis 5000 vpm (0,005 bis 0,5 Vol.-%) Sauerstoff, Kohlendioxyd, Stickstoffmonoxyd, Stickstoff, Distickstoffmonoxyd oder einer Mischung aus diesen Gasen in Argon oder in einer Argon-Helium-Mischung. Bei diesem Verfahren ist Argon notwendiger Bestandteil der Schutzgasmischung, damit die Plasmabildung zügig und stabil einsetzt.

Beim MAG-Schweißen wird Argon als hauptsächlicher Mischgasanteil (> 50 %) mit zusätzlichen aktiven Komponenten wie z.B. CO₂ und/oder Sauerstoff verwendet. Ebenso ist bekannt dem Argon reduzierende Gase oder andere inerte Gase wie z.B. Helium beizumischen.

Reines CO₂ als Schutzgas zu verwenden hat den Nachteil, dass man einhergehend mit der Spritzerbildung nur im vergleichsweise langsamen und wenig produktiven Kurzlichtbogen schweißen kann und dass bei höherer Drahtvorschubgeschwindigkeit nochmals bedeutend mehr Schweißspritzer entstehen.

Wird CO₂ in einer Schutzgasmischung verwendet beträgt der Anteil des CO₂ üblicherweise weniger als 20%.

Argonreiche Mischgase werden hauptsächlich verwendet, um bei Inertgas-Gehalten von mindestens 80 % den Impuls- oder Sprühlichtbogen verwenden zu können, was die Produktivität deutlich erhöht und die Schweißspritzer erheblich reduziert.

In jüngerer Vergangenheit wurden von verschiedenen Stromquellenherstellern neue Stromquellen in den Markt eingeführt, die das Schweißen mit einem geregelten Kurzlichtbogen ermöglichen. Aufgrund der in diesen Stromquellen verbauten Regelungstechnik ist es nun möglich im Kurzlichtbogen nahezu spritzerfrei zu schweißen. Zudem kann der Kurzlichtbogen effektiver verwendet werden (z.B. höhere Schweißgeschwindigkeiten). Ein spritzerfreies Schweißen ist nun sogar bei Verwendung von reinem CO₂ als Schweißschutzgas möglich.

Nachteilig bei der Verwendung von reinem CO₂ als Schweißschutzgas sind allerdings zum Beispiel die stark oxidierte und raue Nahtoberfläche, die ein aufwendiges Säubern und Glätten notwendig macht, sowie die schmale Nahtausbildung, die nur eine geringe Spalttoleranz erlaubt. Dies führt zu erheblichen Mehrkosten bei der Produktion.

Aufgabe der vorliegenden Erfindung ist es daher, ein Verfahren bereitzustellen, das die Schweißeigenschaften eines elektronisch gesteuerten Kurzlichtbogens erhöht und bei dem qualitativ hochwertige Schweißnähte und Lotverbindungen entstehen.

Die Aufgabe wird erfindungsgemäß dadurch gelöst, dass ein Verfahren zum Lichtbogenfügen eines Werkstücks unter einem Schutzgas mit einer abschmelzenden Elektrode unter Verwendung eines Kurzlichtbogens bereitgestellt wird, bei welchem Material von der abschmelzenden Elektrode an das Werkstück unter Bildung eines elektronisch gesteuerten elektrischen Kurzschlusses übergeben wird, wobei das Schutzgas 10 bis 80 Vol.-% Helium und 20 bis 90 Vol.-% CO₂ umfasst.

Das Schutzgas enthält 30 bis 80 Vol.-% CO₂ bzw. 40 bis 80 Vol.-% CO₂, bzw. 50 bis 80 Vol.-% CO₂ und vorzugsweise 60 bis 70 Vol.-% CO₂.

Von den Erfindern wurde überraschenderweise herausgefunden, dass sich durch die Verwendung von Helium-CO₂ - Gemischen die Schweißgeschwindigkeit deutlich steigern lässt, die Spalttoleranz verbessert wird und bessere Nahtoberflächen bereitgestellt werden können. Diese Vorteile sind auf die guten Wärmeleiteigenschaften von Helium zurückzuführen. Dadurch ist eine schnellere Wärmeüber- und Ableitung möglich. Je mehr Helium in der Schutzgasmischung enthalten ist desto dickere Tropfen bilden sich beim Schweißen. Je dicker die Tropfen sind, desto größer können auch die Spalte sein, die mit der Schweißnaht geschlossen werden.

Insbesondere bei der industriellen Massenproduktion kommen die Vorteile dieser Schutzgasmischung zum tragen. Bei Fertigungsstrassen, in denen vollautomatisierte Roboter verwendet werden, bringen schon kleinste Toleranzsteigerungen erhebliche wirtschaftliche Vorteile. Dies beginnt schon bei der Vorbereitung der zu verschweißenden Werkstücke. Je größer die Toleranz ist desto schneller und kostengünstiger können die Werkstücke bereitgestellt werden. Auch ist es bisher sehr kosten- und zeitintensiv die Spann- und Haltewerkzeuge in den Fertigungsstrassen derart präzise einzustellen, dass sie im Toleranzbereich arbeiten. Die ist nun ebenfalls schneller und kostengünstiger möglich. Größere Toleranzen bewirken vor allem weniger kostenintensive Ausfallzeiten an der Fertigungsstraße.

Mit dem erfindungsgemäßen Verfahren werden beim Schweißen dickere Tropfen bereitgestellt, dies ermöglicht eine größere Spalttoleranz, höhere Schweißgeschwindigkeiten und glattere, sauberere Schweißnähte. Je größer die Spalttoleranz ist desto effektiver, schneller und kostengünstiger kann bei automatisierten Prozessen gearbeitet werden. Auch die oft notwendigen Abschaltungen zum nachjustieren der Werkzeuge, um die geringe Toleranz einzuhalten, werden vermieden. Somit trägt das erfindungsgemäße Verfahren entscheidend dazu bei die Fertigungekosten zu senken.

Vorzugsweise enthält das Schutzgas zumindest 20 Vol.-% Helium, 30 Vol.-% Helium, 40 Vol.-% Helium, 50 Vol.-% Helium bzw. 60 Vol.-% Helium.

Vorteilhafterweise enthält das Schutzgas 20 bis 70 Vol.-% Helium.

Das Schutzgas enthält 30 bis 80 Vol.-% CO₂, bzw. 40 bis 80 Vol.-% CO₂, bzw. 50 bis 80 Vol.-% CO₂ und vorzugsweise 60 bis 70 Vol.-% CO₂. Dadurch, dass immer genügend CO₂ im Schutzgas enthalten ist, setzt die Plasmabildung zügig und stabil ein. Ist weniger Helium als angegeben im Schutzgas enthalten, wird ein auf die hohe Wärmeleitfähigkeit des Heliums zurückzuführender Einfluss auf den Schweißprozess nicht bemerkt. Bevorzugt ist im Schutzgas 30 bis 60 Vol.-% Helium enthalten, ganz bevorzugt 35 bis 55 Vol.-%. Bei diesen Heliumanteilen zeigen sich diese, auf das Helium zurückzuführenden Eigenschaften des Schutzgases besonders ausgeprägt.

In einer bevorzugten Ausführungsform des erfindungsgemäßen Verfahrens enthält das Schutzgas 30 - 60 Vol.-% Helium in CO₂. Hieraus ergibt sich der beste Kosten/Nutzen Ertrag. In einer weiteren bevorzugten Ausführungsform des erfindungsgemäßen Verfahrens enthält das Schutzgas 50 - 70 Vol.-% Helium in CO₂. Hieraus ergeben sich die größten Vorteile bezüglich der Überbrückung von Spalten.

Das Helium unterstützt mit seiner hohen Wärmeleitfähigkeit die einsetzende Metalldampfplasmabildung des Materials. Durch die Verwendung von Helium lässt sich das Plasma und somit die Einschweißtiefe besser kontrollieren.

Die Verwendung von Helium macht zwar die Einstellung einer etwas höheren Schweißspannung notwendig, bewirkt jedoch auch eine bessere Erwärmung des Bauteils wodurch der schmelzflüssige Werkstoff besser fließt und benetzt. Es ist daher möglich schneller zu Schweißen als ohne Helium, so dass die eingebrachte Streckenenergie im Vergleich zur Schweißung unter reinem CO₂ sogar nochmals abnimmt. Bauteilspannungen oder -verzug können so weiter reduziert werden.

Der Anteil von Helium im Schutzgas erfordert bei gleicher Lichtbogenlänge eine erhöhte Lichtbogenspannung. Der vergleichsweise heißere Lichtbogen führt zu einer breiteren und damit flacheren Naht. Der Einbrand wird dadurch runder und tiefer. Dies erlaubt höhere Schweißgeschwindigkeiten und gewährleistet das sichere Durchschweißen im Wurzelbereich.

Zudem verbessert das Helium die Entgasungsbedingungen und verhindert so die Porenbildung.

Durch die oben beschriebenen Eigenschaften des Schutzgases wird der gesamte Fügeprozess deutlich stabiler und damit besser beherrschbar. Infolgedessen wird die Schweiß- beziehungsweise Lotnaht gleichmäßig mit dem Zusatzmaterial gefüllt, eine gleichbleibende Raupe wird erzeugt und auch die Porenhäufigkeit wird deutlich herabgesetzt. Diese Vorteile stellen sich auch bei hohen Bearbeitungsgeschwindigkeiten ein, welche bisher nur sehr schlecht beherrschbar waren.

In einer bevorzugten Ausführungsform kann dem im erfindungsgemäßen Verfahren eingesetzten Helium - CO₂ Gemisch auch bis zu 50% (bevorzugt bis zu 30%) Argon zugemischt werden. Der CO₂ Anteil muss jedoch auch dann mindestens 20% betragen.

In einer weiteren bevorzugten Ausführungsform können dem im erfindungsgemäßen Verfahren eingesetzten Helium - CO₂ Gemisch auch Sauerstoff, Kohlendioxid, Stickstoffmonoxid, Stickstoff, Distickstoffmonoxid oder eine Mischung aus zweien oder mehreren dieser Gase in einer Menge von bis zu 2000 ppm als Dotierung beigemischt werden.

Die verbesserten Schweißeigenschaften sind auf die Eigenschaften der verwendeten Schutzgasmischung zurückzuführen. Das in der Schutzgasmischung als Dotiergas enthaltene Sauerstoff/Kohlendioxid/Stickstoffmonoxid/Stickstoff/Distickstoffmonoxid lagert sich an der der Oberfläche des Werkstücks an. An diesen Stellen kommt es zu einer Feldüberhöhung des elektrischen Feldes, das durch das Anlegen der Schweißspannung zwischen Elektrode und Werkstück entsteht. An diesen Stellen beginnt nun die Plasmabildung.

Zuerst ionisiert nur das Helium. Durch die bei der lonisation frei werdenden Elektronen beginnt der Lichtbogen zu brennen, wodurch sich der Energieeintrag stark erhöht. Nun verdampft Werkstückmaterial und das verdampfte Material ionisiert. Da das Material im Vergleich zum Helium leichter ionisiert, nimmt die Elektronenemission sehr stark zu und der Lichtbogen brennt nun stabil. Durch die begrenzt vorhandene Dotierung von bis zu 2000 ppm bilden sich vereinzelte Inseln aus angelagertem Dotiergas in ausreichender Zahl, um die Plasmabildung zügig und stabil einsetzen zu lassen. Anderseits ist bei dieser Dotierung die Konzentration der Dotiergase so gering, dass unerwünschte metallurgische Effekte nicht auftreten.

Bevorzugt enthält das Schutzgas 200 bis 600 vpm (0,02 bis 0,06 Vol.-%) Sauerstoff, Kohlendioxid, Stickstoffmonoxid, Stickstoff, Distickstoffmonoxid oder eine Mischung aus zweien oder mehreren dieser Gase. Mit dieser Dotierung wird die Wiederzündfähigkeit nach erfolgtem Kurzschluss besonders vorteilhaft unterstützt.

Das Schutzgas kann zusätzlich bis zu 50 Vol.-% Argon, bevorzugt bis zu 30 Vol.-% Argon enthalten. Eine hoher Anteil Helium ist aufgrund der guten Wärmeleitfähigkeit des Heliums bevorzugt, so dass ein Anteil Argon von mehr als 30 Vol.-% nur in speziellen Ausnahmen zweckmäßig ist.

Die erfindungsgemäße Schutzgasmischung bleibt nur bei sehr niedrigen Drücken in gasförmiger Lösung. Daher ist nur eine geringe Menge in Gasflaschen speicherbar. Dies würde einen häufigen Flaschenwechsel erforderlich machen. Daher werden bevorzugt Gasgemische verwendet um die gewünschte Gasgemischzusammensetzung vor Ort bereitzustellen.

Die maximalen Fülldrücke für CO₂ / Helium - Gemische sind in Tabelle 1 dargestellt.

| | Max. Fülldruck bei Auslegung auf | |
|---|---|---|
| Gemisch (CO₂/He) | +10°C | -10°C |
| 50/50 | 90,2 bar | 52,9 bar |
| 70/30 | 64,4 bar | 37,8 bar |
| 90/10 | 50,1 bar | 29,4 bar |

Das erfindungsgemäße Verfahren ist zum Schweißen von unlegiertem Stahl geeignet, dies umfasst auch unlegierte Stähle für besondere Anwendungen, wie z.B. warmfeste, hochfeste, Werkzeug-, Vergütungs- oder Feinkornstähle und beschichtete (z.B. elektrolytisch oder schmelztauch verzinkte, aluminierte oder mit einer organischen Schutzschicht versehene) Stähle.

Das erfindungsgemäße Verfahren zeigt seine Vorteile, wenn Werkstücke mit einer Dicke von weniger als 5 mm, vorzugsweise von weniger als 3 mm verfügt werden. So werden auch bei dünnen Blechen mit Wandstärken von weniger als 1,0 mm (ab ca. 0,5 mm aufwärts) Fügeverbindungen ohne Löcher erreicht.

In einer anderen vorteilhaften Ausgestaltung der Erfindung werden Werkstücke aus Stahllegierungen verschweißt. Auch bei diesen Werkstoffen zeigen sich die Vorteile des erfindungsgemäßen Verfahrens. Insbesondere ist das Verfahren für nichtrostende Stähle geeignet. Nichtrostende Stähle weisen einen Anteil von etwa 13% Chrom auf, der im austenitischen oder ferritischen Mischkristall gelöst sein muss. Nichtrostende Stähle können auch Legierungsbestandteile wie Nickel, Molybdän, Mangan und Niob aufweisen.

## Patentansprüche

1. Verfahren zum Lichtbogenfügen eines Werkstücks unter einem Schutzgas mit einer abschmelzenden Elektrode unter Verwendung eines Kurzlichtbogens, bei welchem Material von der abschmelzenden Elektrode an das Werkstück unter Bildung eines elektronisch gesteuerten elektrischen Kurzschlusses übergeben wird, **dadurch gekennzeichnet, dass** das Schutzgas 10 bis 80 Vol.-% Helium und 20 bis 90 Vol.-% CO₂ umfasst.

2. Verfahren nach Anspruch 1, **dadurch gekennzeichnet, dass** das Schutzgas 30 bis 80 Vol.-% CO₂ enthält.

3. Verfahren nach Anspruch 1, **dadurch gekennzeichnet, dass** das Schutzgas 40 bis 80 Vol.-% CO₂ enthält.

4. Verfahren nach Anspruch 1, **dadurch gekennzeichnet, dass** das Schutzgas 50 bis 80 Vol.-% CO₂ enthält.

5. Verfahren nach Anspruch 1, **dadurch gekennzeichnet, dass** das Schutzgas 60 bis 70 Vol.-% CO₂ enthält.

6. Verfahren nach Anspruch 1, **dadurch gekennzeichnet, dass** das Schutzgas 20 bis 70 Vol.-% Helium, bevorzugt 30 bis 60 Vol.-% Helium enthält.

7. Verfahren nach Anspruch 1, **dadurch gekennzeichnet, dass** das Schutzgas ausschließlich He und CO₂ enthält.

8. Verfahren nach Anspruch 1, **dadurch gekennzeichnet, dass** das Schutzgas zusätzlich bis zu 50 Vol.-% Argon, bevorzugt bis zu 30 Vol.-% Argon enthält.

9. Verfahren nach einem der Ansprüche 1 bis 4, **dadurch gekennzeichnet, dass** das Schutzgas zusätzlich 200 bis 600 vpm (0,02 bis 0,06 Vol.-%) Sauerstoff, Kohlendioxid, Stickstoffmonoxid, Stickstoff, Distickstoffmonoxid oder eine Mischung aus zweien oder mehreren dieser Gasen enthält.

10. Verfahren nach einem der Ansprüche 1 bis 4, **dadurch gekennzeichnet, dass** Werkstücke mit einer Dicke von weniger als 5 mm, vorzugsweise von weniger als 3 mm verfügt werden.

11. Verfahren nach einem der Ansprüche 1 bis 5, **dadurch gekennzeichnet, dass** Auftragschweißungen oder Reparaturschweißungen z.B an Werkzeugstählen durchgeführt werden

12. Verfahren nach einem der Ansprüche 1 bis 5, **dadurch gekennzeichnet, dass** Werkstücke aus Stahllegierungen verschweißt werden.

13. Schutzgas zum Lichtbogenfügen gemäß einem der Ansprüche 1 bis 8,
**dadurch gekennzeichnet,**
**dass** das Schutzgas 10 bis 80 Vol.-% Helium und 20 bis 90 Vol.-% CO₂ umfasst.
